# EUROPEAN PATENT APPLICATION

(11) **EP 1 806 873 A1**
(43) Date of publication of application: **11.07.2007**
(21) Application number: 06100173.1
(22) Date of filing: 09.01.2006
(51) Int. Cl.: H04L 12/28

(54) **Wireless communication device with means for adapting its functionality according to its location**

(71) Applicant: ShockFish S.A., 1015 Lausanne (CH)
(72) Inventor: Meier, Roger, 1007, Lausanne (CH); Ledin, Bendicht, 1024, Écublens (CH); Métrailler, Pierre, 1958, Saint Léonard (CH)
(74) Representative: Wenger, Joel-Théophile

(57) **Abstract**

The possibility to determine with high precision the position of a wireless interactive communication device within pre-defined boundaries opens new range of services, which are location based.

According to the invention, it is proposed a wireless interactive communication device comprising a microprocessor accessing a memory, this communication device comprising a communication channel to receive and store in the memory a database containing the spatial model of the venue where the device is used, this device furthermore comprising a facility to determine its position by listening to synchronized fixed beacons, allowing the communication device to retrieve from the spatial model the area of the venue where it is located, subsequently allowing the communication device to adapt its functionality and or wireless communication behavior to the area where it is located, allowing the reduction of the interactive communication device power consumption and/or the optimization of the wireless communication bandwidth.

## Description

### Introduction

The present invention concerns the field of multi-function wireless terminals, in particular for short range communication between the terminals.

### Background art

The need to enhance the communication between participants of the same meeting is not new. Accenture and Hewlett-Packard have presented a solution based on the iPaq, a pocket PC able to receive news and the list of attendees, send or receive messages or locate a particular place on the map. This solution is used by the World Economic Forum in Davos (CH) since many years. Each participant receives such an iPaq device with bi-directional communication capabilities. The participant is therefore always kept up to date with the latest events or reports. The communication capabilities were mainly toward the management center for receiving the data and sending messages. The direct communication between terminals is limited to standard portable phone abilities, i.e. sending business card via Bluetooth or infrared.

A new generation of terminals is proposed in the PCT/IB2005/052537 in which the communication capabilities have been greatly improved. Thanks to an additional communication channel, a genuine communication between two terminals was possible. This capability was also used for detecting the proximity of a particular terminal by watching the radio signal of the nearby terminals and discriminating according to a filter set by the user.

Due to the lack of precision of such detection method, only rough positioning is possible and the distance from a given terminal to a target terminal was only an estimation.

The announcement of a new technology allowing high precision distance measurements between two or more devices opens new field of application. Taking advantage of this new technology allows distance measurements with a precision in the order of 10 cm.

### Brief description of the invention

The aim of the present invention is to provide new technical features to participants using a position determination module in their terminals. Today, user-friendly management of a multitude of functions is limited or simply not possible due to the impossibility to precisely locate a participant. All functions of the terminal must be made accessible via menus at all times, leading to complex and deep menu trees that are hard to memorize. It is the object of this invention to propose a wide range of applications easily available to the user.

According to a first object of the invention, it is proposed a wireless interactive communication device comprising a microprocessor accessing a memory, this communication device comprising a communication channel to receive and store in the memory a database containing the spatial model of the venue where the device is used, this device furthermore comprising a facility to determine its position by listening to synchronized fixed beacons, allowing the communication device to retrieve from the spatial model the area of the venue where it is located, subsequently allowing the communication device to adapt its functionality and or wireless communication behavior to the area where it is located, allowing the reduction of the interactive communication device power consumption and/or the optimization of the wireless communication bandwidth.

According to a second object of the invention, it is proposed a method to broadcast location dependent commands to a wireless terminal, said terminal comprising means to dynamically determine its physical position, said method comprising the steps of discriminating the commands which refer to the location area where the terminal is located, executing this command, said command consisting of enabling a function on the terminal, this function being related with an event in the location area.

According to a third object of the invention, it is proposed a method to define a subset of broadcasted audio or video channels among a set of audio or video channels on a wireless terminal comprising means to dynamically determine its physical position, this method comprising the steps of receiving the set of audio or video channels, checking if the reception of at least one channel is allowed according to the current location of the terminal, defining the subset of channels according to the location of said terminal and allocating the subset of channels to selectable channels by the user.

According to a fourth object of the invention, it is proposed a method to manage the reception of messages on a wireless terminal, said terminal comprising means to dynamically determine its physical position. This terminal receives an instruction from a management center to enable/disable the prompt of the received messages to the terminal's holder related to a location area, this method comprising the steps of receiving a message from the management center, determining according to the current physical location and the location area defined in the instruction message if the reception of messages is disabled, in the positive event, storing said message without prompting the user. When the current physical location is outside the location area defined in the instruction message, the terminal prompts the user informing the same of the received messages. In an alternative case, the management center sends an enable instruction message allowing the terminal to inform the user of the received messages regardless of the current location.

According to a fifth object of the invention, it is proposed a method to control the access of a wireless terminal's holder to premises at an inlet, said terminal comprising means to dynamically determine its physical position, this method comprising the steps of detecting the presence of a person by detection means located in the inlet, obtaining the physical location of the terminal and if a terminal is physically present in the inlet, allowing the terminal's holder to access to the premises.

According to a sixth object of the invention, it is proposed a method to identify a wireless terminal's holder to premises, said terminal comprising means to dynamically determine its physical position, this method comprising the steps of acquiring an image of the premises, receiving the physical position of the terminal, retrieving the name of the terminal's holder, displaying the image of the premises together with the name of the terminal's holder at the visual location corresponding to the location of said terminal.

### Brief description of the figures

The invention will be better understood thanks to the attached figures in which :
- the figure 1 illustrates the wireless terminal listening to a plurality of beacons,
- the figure 2 illustrates the automatic command mode,
- the figure 3 illustrates the step of filtering channels depending of the location,
- the figure 4 illustrates an optical barrier which will be crossed by a terminal's holder,
- the figure 5 illustrates how an image acquired with a surveillance camera is enhanced with the name of each person.

### Detailed description of the invention

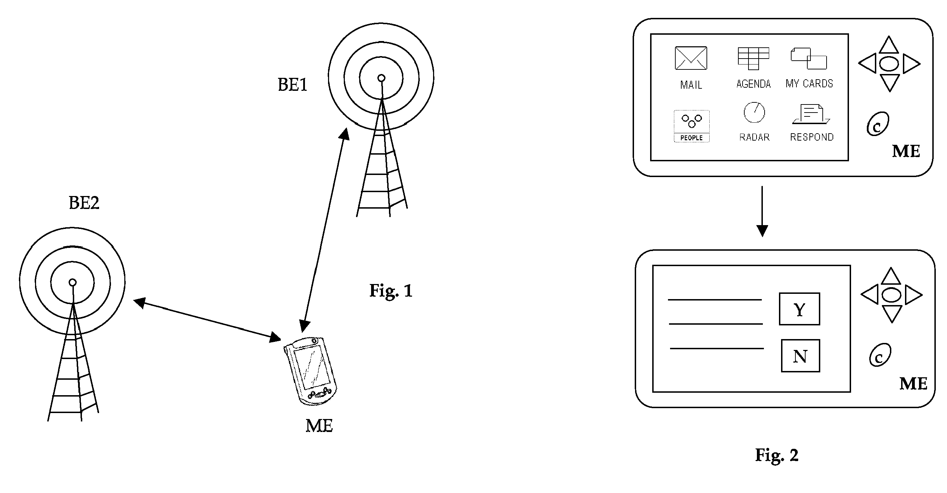

The figure 1 shows how a wireless terminal ME determines its current location. This method uses at least two beacons BE1, BE2 which are able to interact with the terminal ME. This interaction has the form of a bi-directional communication between the two beacons and the terminal and uses the response delay. This can be the base of a vector determination from the known location of the beacon. Another measurement with another beacon allows the determination of another vector, the intersection of these two vectors defining the current location of the terminal ME. In some cases, we can obtain two intersections and this uncertainty can be solved by using either the location's history (previous location) or a third and in some cases fourth beacon. While using the location's history, the proper intersection is the one which is the nearest from the last known unambiguous location.

The location determination can be either active or passive. In the active mode, the beacons interact with the terminal. An exchange protocol allows the terminal to determine the distance from a beacon. After determining the distance to multiple beacons the exact position is calculated.

In the passive mode, the beacons are broadcasting synchronized signals. The terminal listens to these synchronized signals. The use of 3 or more beacons also named anchors allows the terminal to calculate its position using time difference of arrival method.

This position information can be transmitted to nearby terminals in an identification packet at a regular interval. Thanks to this information, a terminal can create a 3D representation of all terminals around it.

According to the first embodiment of the invention, the wireless interactive communication device ME comprises a memory with a database in which the spatial model of the venue is stored. More generally, the walls, gates, doors, stairs are defined in this database for a specific conference area. Due to the fact that such device is battery powered, special care of the power consumption is taken. The behavior of the device can vary according to the definition of the current location of the device. This behavior can not only vary in function of the location but also in function of the time. For example, if the participant is in the restaurant, the rate to determine its location can be lowered, in particular if no change was noticed during a predefined period.

In the same manner, during a conference which is defined by a starting and ending time, the participant is assumed to be at the same place and the position detection rate is lowered.

Additional means can be used to detect a terminal's movement such as a vibration detector. No vibration of the terminal means that the location was not modified. When vibrations are detected, the location determination module is fully awake.

The rate of the position messages sent to the management center can be influenced by the location. Depending on the area where the terminal is located, the number of messages can vary. This is also another method to efficiently manage the bandwidth allocated to such messages. In case of particular event taking place in a room, e.g. during a voting process, the position messages of the terminals in this room are temporarily disabled to allocate full bandwidth to the voting responses.

According to the second object of the invention, the terminal ME, in view of the high number of functions proposed to the user, has a complex and deep menu tree to access all these functions. Each portable phone is acquainted with such an interface and the user spends a lot of time to retrieve a specific function. The purpose of the present invention is to reshape the proposed functionalities of the terminal according to the event currently held at a location area. Only the terminals which are present within this location area will react and switch from the normal mode of operation to the new mode of operation. One example is a vote taking place at the room B2. The upper figure 2 shows a terminal in standard mode displaying the default menu. In case that not all present participants are allowed to vote, the management system only enables participants allowed to join this voting process. A message is sent from the management center to the selected participants with a voting command, the location area where the voting process takes place and possibly the question to be answered. The terminals receiving this command first check if the location area condition is met. In the contrary, the terminal simply ignores this command.

In case that the terminal is located within the location area defined in the command, the default menu is replaced by a specific menu related to the voting process without any user's intervention. This is illustrated by the lower figure 2. When the selection is done, the terminal sends a message back to the management center which gathers all responses. In an alternate embodiment, the message sent from the management center can comprise a timeout to switch back to the standard menu, in particular, if no action is taken by the user. Alternatively, the management center can also send a cancellation command to restore the standard menu on the terminals. The application will exit automatically, when the user walks out of the session.

It is to be noted that, according to an embodiment, the alternate menu enabled by the command can't be accessible in normal operation. Some functions remain hidden to the user even if he/she is entering the standard menu and trying to find the alternate menu.

According to the third object of the invention, the wireless terminal ME is used to receive audio channels e.g. for simultaneous translation. The known solution is to send those channels via infrared, which automatically limits the area covered to the room where transmitters are installed, since the infrared signal does not penetrate walls. When radio waves are used instead of infrared waves, an additional problem is raised when several events take place at the same time at close locations. It is then necessary for a participant to choose the conference in its location area and then select the translation language. If the participant leaves the location area of this conference and joins another conference, he will continue to receive the translation of the previous conference.

Another drawback of this situation is the confidentiality issue. The infrared waves were naturally limited to the conference room and no one outside this room could receive the translations. This is in some cases very important. If negotiations are in progress in a room, the translation channels should not be accessible outside the room.

The present invention proposes a smart filtering method based on the current location of the terminal. Several translation channels are transmitted by the management center covering more than one room or event. Depending of the current location of the terminal, the same filters the channels not referring to the location area where the terminal is located. The user can simply choose a language without having the need to select the appropriate room. The terminal proposes the channels A, B or C which only refer to the location area. When the terminal leaves the location area, the reception of the channels is automatically disabled.

The same can be applied for video or images. For example the chart or power-point presentation currently displayed beside the lecturer is sent through a channel automatically selected by the terminal depending of the location of same. In case that a user has selected to display lecturer support, using the location area attached to the image data, the terminal can select among different images, the one that corresponds to the terminal's location. This simplifies the selection proposed to the user by eliminating all information not relevant for this session.

In order to secure the channel's reception, beside the filtering function based on the current location, an additional level of security can be achieved by encrypting the channels. Yet another level of security can be achieved by sending the corresponding key only to the terminals located in the conference location area.

This function can be applied to messages instead of audio channels. This wireless device receives a general purpose messages and comprises discriminating means for checking if the reception of at least one message is allowed according to the current location of the device. The message contains an indication in which location the reception is allowed (positive discrimination) or in which location the reception is not allowed (negative discrimination). The discriminating means comparing the current location and the received location indication and allowing (or blocking) the messages to be prompted to the user according to the result of this comparison.

According to the fourth embodiment, the wireless terminal could receive messages. These messages can be generally addressed (or group addressed) or dedicated to only one terminal. Usually, once the message arrives to the terminal, the same gives a signal to the user, through a sound or a vibration. The present invention addresses the problem of disturbing the user with messages at an inappropriate time. The location determination means of the terminal are used to determine if the terminal is allowed to prompt the user with received messages. The prompting decision is made based on information sent by the management center, which comprises the location area where the disabling state is to be applied. The terminal checks whether it is located in that area and acts accordingly. The location is a room where a conference takes place. From the time the conference begins until the conference ends, the location area defined by the room is disabled from receiving messages.

According to a first embodiment, the terminal executes the function of enabling or disabling the message reception. When a message arrives, verification is carried out to check whether the current location is within a disabled location area. In the positive event, the terminal stores the message without giving any notice to the user. When the terminal goes out the disabled location area, it automatically enables the processing of the messages and prompts the user if messages have been received in the meantime.

When the session is over, the management center sends a message to release the terminal restrictions allowing it to prompt the user with the messages received in between.

According to another embodiment, the management center handles all enabling and disabling functions by refraining from sending messages to terminals located in a disabling area. The management center gathers the location of each terminal and when a message should be addressed to a terminal, the center checks the current state of the location where the terminal is located and sends or suspends the message to it.

When the management center detects that the terminal has left the conference's room, the messages previously suspended are sent.

One problem that the management of the conference is faced with is the proper detection of the end of a session. The starting time is usually not a problem since it is scheduled in advance and the disabling message can be sent in advance. It is to be noted that such disabling command could be accompanied with a time at which the command takes effect. An additional time could also be attached to this message to set a time at which the restriction is released.

However, a session can last more that the foreseen time and the generation of prompting signals at the expected end time can have a disastrous effect if the session is still continuing. This is the reason why the management center can use the indication that a percentage of the participants have left the conference room to automate the end status of the conference. According to an example, the number of participants (or terminals) is counted during the conference (the number at the middle of the conference is a good base) and when a predefined percentage (e.g. 30%) of this number has left the conference room, this will be the time to send the releasing command.

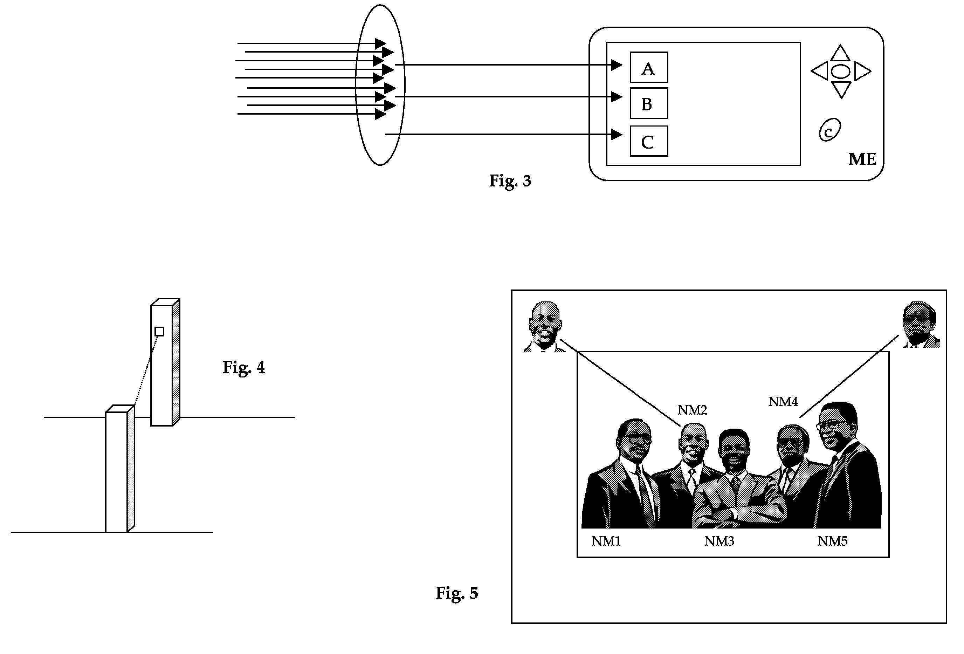

According to the fifth object of the invention, the terminal is used to control the access of a terminal's holder to premises. The figure 4 shows an optical barrier to detect the presence of a person positioned in an inlet accessing the premises. Various techniques can be used based on ultra-sound, infrared or Doppler detectors to detect the entry into another room.

When detection occurs, the management center checks the presence of the terminals in that area and in particular if the terminal positioned where the detection means are located has the right to go in.

Alternatively, if no terminal is detected, an alarm can be generated or the next gate remains closed.

More generally, the terminal can warn the user when entering in a non-allowed zone. The terminal stores data relative to the permission to specific areas in relation to the terminal's holder. When the terminal moves to a restricted area, the terminal sends a signal to warn the user.

This feature allow e.g. to keep the doors open as long as authorized persons are entering. When detection is made at the inlet without the corresponding detection of the terminal's older, the door is closed. If the access control is further assisted by a control person, the attention is given to that person only in case that non-terminal's older is present at that door.

According to the sixth object of the invention, the terminal's location serves to the identification of a person on an image. Control cameras acquire images, which are displayed on a screen. As shown in the figure 5, the physical location of each terminal's holder located on the acquired image is determined, so as to produce an image with the name (NM1, NM2 ... NM5) beside each person. The image processing first isolates each terminal and obtains its physical location. The image is therefore arranged so that for each position recognized, the owner's name is attached to the position determined. Thanks to the location information received from the terminals, the system can match an image with identification and therefore can apply the name on the displayed image.

According to an alternative embodiment shown in figure 5, the initial picture taken while registering the terminal's holder, is displayed in an external region of the displayed image for easily comparing the genuine holder and the person's face currently shown. The system can additionally draw a line between each person identified in a crowd and their respective initial pictures. This system speeds up the identification of alien, which on one hand do not bear a terminal or on the other hand use the terminal of another person. Special marking of the image being possible by the system in the first case, the second case still needs a human comparison.

## Claims

1. Wireless interactive communication device comprising a microprocessor accessing a memory, this communication device comprising a communication channel to receive and store in the memory a database containing the spatial model of the venue where the device is used, this device furthermore comprising a facility to determine its position by listening to synchronized fixed beacons, allowing the communication device to retrieve from the spatial model the area of the venue where it is located, subsequently allowing the communication device to adapt its functionality and or wireless communication behavior to the area where it is located, allowing the reduction of the interactive communication device power consumption and/or the optimization of the wireless communication bandwidth.

2. Wireless interactive communication device of claim 1, **characterized in that**, the communication means comprises at least two location determination rates, the lowest rate being selected when the device is located within predefined locations.

3. Wireless interactive communication device of claim 2, **characterized in that**, the lowest rate is further selected according to time criteria.

4. Wireless interactive communication device of claims 1 to 3, **characterized in that**, the device further comprises vibration detection means which, when vibration is detected, select the highest detection rate.

5. Wireless interactive communication device of claims 1 to 4, **characterized in that**, said device furthermore has a facility to send location and area information in an ID packet.

6. Wireless interactive communication device of claims 1 to 5, **characterized in that**, this device comprises discriminating means to enable/disable commands which refer to the location area where the terminal is located, a command consisting of enabling a function on the terminal, this function being related with an event in the location area.

7. Wireless interactive communication device of claim 6, **characterized in that**, the device comprises a user selectable menu with a default menu, the command further comprises parameters defining an alternate menu, this command switching the default menu to the alternate menu as defined in the command.

8. Wireless interactive communication device of claim 7, **characterized in that**, the alternate menu is only accessible by the user after reception of the command.

9. Wireless interactive communication device of claims 1 to 8, **characterized in that**, this device is receiving a set of audio or video channels and comprises discriminating means for checking if the reception of at least one channel is allowed according to the current location of the device, means to filter a subset of channels according to the location of said device and means to allocate the subset of channels to selectable channels by the user.

10. Wireless interactive communication device of claim 9, **characterized in that**, the subset of channels comprises location data in which the reception is authorized, the discriminating means disabling the reception of the subset of channels as soon as the current location exits the authorized location.

11. Wireless interactive communication device of claims 1 to 10, **characterized in that**, it comprises means to store a command disabling the user's prompt in a predefined area, location comparison means to compare the current location with the predefined area, storage means to store messages if the comparison means determine that the device is within the predefined area, and means to prompt the user of the received messages when the comparison means determine that the device is outside the predefined area.

12. Wireless interactive communication device of claim 11, **characterized in that**, the device receives a releasing command allowing the prompt of the user of the received messages without checking the current location.

13. Wireless interactive communication device of claims 1 to 12, **characterized in that**, this device is receiving a general purpose message and comprises discriminating means for checking if the reception of at least one message is allowed according to the current location of the device, said discriminating means allowing or blocking the message according to the location of said device.

14. Wireless interactive communication device of claim 13, **characterized in that**, the message comprises location indication in which the message is allowed for prompting to the user.

15. Wireless interactive communication device of claim 13, **characterized in that**, the message comprises location indication in which the prompting to the user of said the message is blocked.
